# FASCICULE DE BREVET EUROPEEN

(11) **EP 2 608 994 B1**
(45) Date de publication et mention de la délivrance du brevet: **24.05.2017**
(21) Numéro de dépôt: 11757393.1
(22) Date de dépôt: 12.08.2011
(51) Int. Cl.: B60W 50/04, B60W 50/02, B60W 50/00

(54) **PROCEDE DE CONTROLE DU FONCTIONNEMENT D'UN VEHICULE**
VORRICHTUNG ZUR ÜBERWACHUNG DES BETRIEBS EINES FAHRZEUGS
METHOD FOR MONITORING THE OPERATION OF A VEHICLE

(30) Priorité: 27.08.2010 FR 1056799
(43) Date de publication de la demande: 03.07.2013
(73) Titulaire: Peugeot Citroën Automobiles SA, 78140 Vélizy Villacoublay (FR)
(72) Inventeur: ATTABOU, Thami, F-27120 Pacy sur Eure (FR); DAUNAS, Olivier, F-95000 Cergy (FR)
(86) Numéro de dépôt international: PCT/FR2011/051908
(87) Numéro de publication internationale: WO 2012/025681

(56) Documents cités:
- EP-A1- 1 647 707
- EP-A2- 1 832 484
- DE-A1-102007 010 264
- DE-A1-102008 063 611
- US-A1- 2003 154 952
- US-A1- 2004 159 479
- US-A1- 2010 106 390
- US-B1- 6 253 143
- US-B1- 6 314 347

## Description

L'invention se rapporte à un procédé de contrôle du fonctionnement d'un véhicule adapté à être actionné électriquement ou par un moteur thermique.

Les systèmes d'arrêt et de redémarrage automatique du moteur thermique des véhicules tendent à se généraliser. Ces systèmes, souvent désignés par l'abréviation STT ou par l'expression anglaise Stop & Start System, correspondent à une fonction d'arrêt et de redémarrage automatique encore nommée fonction marche/arrêt qui en position d'arrêt (phase de « STOP » en terminologie anglaise) assure que le fonctionnement du moteur thermique est stoppé et qui en position marche assure le redémarrage du fonctionnement du moteur thermique. Cela permet de diminuer la consommation de carburant et donc les émissions polluantes, comme l'émission de dioxyde de carbone. Ces systèmes s'appliquent aussi bien à un véhicule du type hybride ou non.

Le fonctionnement des véhicules équipés d'une telle fonction marche/arrêt implique d'une part, une demande du conducteur et, d'autre part, une autorisation du véhicule pour entrer en phase d'arrêt automatique du moteur. Sous certaines contraintes, (par exemple niveau énergétique du véhicule faible, besoin du groupe motopropulseur, besoin de protection ou de régulation thermique), le « système véhicule » peut interdire l'arrêt automatique du moteur. Par « système véhicule », on désigne un ensemble de systèmes de contrôle habituel d'organes du véhicule, tels que par exemple les freins, le moteur, la boite de vitesse, l'assistance de la direction, la charge de la batterie, les systèmes de sécurité ABS et ESP. Il s'agit donc d'une surveillance fonctionnelle.

Le fonctionnement de la fonction marche/arrêt impose par exemple que les moyens de remise en marche du moteur thermique soient suffisants. Si une batterie est utilisée pour actionner le démarreur, il faut que la capacité et la charge de la batterie soient suffisantes. Une solution consiste alors à augmenter la capacité de la batterie, mais au détriment du coût et de l'encombrement. Selon une autre solution, la charge de la batterie est contrôlée avant chaque arrêt automatique du moteur afin de s'assurer que la charge de la batterie sera suffisante pour redémarrer automatiquement le moteur. Si ce n'est pas le cas, le moteur n'est pas arrêté automatiquement. Cependant, ce fonctionnement peut être déroutant pour le conducteur car ce dernier s'attend à l'arrêt du moteur dans certaines circonstances, par exemple à l'arrêt à un feu rouge de signalisation. De plus, certains organes du véhicules, tels que les phares, la radio ou encore le climatiseur, consomment de l'énergie électrique et, si la batterie n'est pas assez chargée, la remise en marche automatique du moteur pourrait être difficile, voire impossible. Dans de telles situations, il peut alors être préférable d'interdire l'arrêt automatique du moteur, de façon à maintenir une charge suffisante de la batterie. Ces indisponibilités, momentanées, de l'arrêt automatique du moteur à l'insu du conducteur, peuvent le surprendre et l'inquiéter.

Des solutions partielles ont déjà été proposées. Par exemple, le brevet US-B- 4 555 006 décrit un dispositif qui avertit le conducteur par un signal lumineux que le moteur est à l'arrêt.

La demande de brevet EP-B-1 077 149 décrit un système STT pourvu d'une alarme qui se déclenche pour indiquer au conducteur que le moteur est arrêté. Il propose aussi d'informer le conducteur du redémarrage du moteur lorsque le conducteur relâche la pédale d'embrayage.

Le brevet US-B-4 481 425 décrit un système STT comprenant un avertisseur lumineux informant le conducteur du fonctionnement ou de l'arrêt du système. Le document US2010106390 décrit un système STT conforme au préambule de la revendication 1.

Cependant, ces documents ne permettent pas au conducteur de comprendre dans quelles situations il est normal que la fonction marche/arrêt soit inhibée.

Il existe donc un besoin pour un procédé permettant d'assurer que le conducteur associe le non-arrêt automatique du moteur à une situation de fonctionnement normal alors que le conducteur s'attend à l'arrêt automatique du moteur thermique par la fonction marche/arrêt.

Pour cela, il est proposé un procédé de contrôle du fonctionnement d'un véhicule comprenant un moteur thermique et un calculateur ayant une capacité de mémoire, le véhicule étant muni d'une fonction marche/arrêt du moteur thermique. Le procédé comporte les étapes de détection d'une inhibition de la fonction marche/arrêt du moteur thermique et de détermination de la cause de l'inhibition. Le procédé comporte également la mémorisation de la cause, la mémorisation des causes ayant lieu pendant une fenêtre kilométrique calibrable en fonction de la capacité.

En variante, le procédé comporte en outre une étape de détection de l'activation de la pédale de frein.

Selon un mode de réalisation, le procédé comporte en outre une étape de détection d'une vitesse du véhicule inférieure à un certain seuil.

En variante, la fenêtre kilométrique est de 200 km.

Selon un mode de réalisation, la fenêtre kilométrique est séparée en divisions égales.

Selon encore un autre mode de réalisation, en ce que les différentes causes enregistrées pendant la fenêtre kilométrique sont totalisées.

Selon une autre variante, le procédé comprend en outre une étape de remise à zéro des totaux des apparitions de cause à la fin de la fenêtre kilométrique.

Dans un mode de réalisation les causes sont l'une ou plusieurs des causes du groupe composé de :
- l'absence du conducteur dans l'habitacle,
- l'état du système thermique de l'habitacle,
- la mise en oeuvre de l'aide au stationnement,
- la mise en oeuvre de l'aide au démarrage en pente,
- le niveau de vide dans le système de freinage,
- le niveau de carburant dans lé réservoir,
- la protection des organes du groupe moto-propulseur,
- l'état du sous-ensemble électro-moteur,
- la redémarrabilité du moteur,
- l'état de la boîte de vitesse,
- l'état d'ouverture du capot moteur et
- une situation de reconfiguration de la fonction marche/arrêt.

Il est également proposé un véhicule comprenant un moteur thermique et muni d'une fonction marche/arrêt du moteur thermique. Le véhicule comporte en outre un calculateur adapté à mettre en oeuvre le procédé précédemment décrit.

D'autres caractéristiques et avantages de l'invention apparaîtront à la lecture de la description détaillée qui suit des modes de réalisation de l'invention, donnés à titre d'exemple uniquement et en références au dessin qui montre :

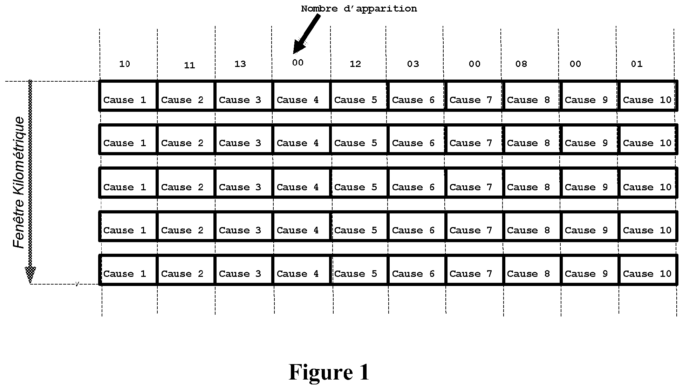

- figure 1, une représentation schématique d'une matrice.

Il est proposé un procédé de contrôle du fonctionnement d'un véhicule comprenant un moteur thermique. Le véhicule est muni d'une fonction d'arrêt et de redémarrage du moteur thermique encore nommée fonction marche/arrêt qui en position d'arrêt assure que le fonctionnement du moteur thermique est stoppé car par exemple le véhicule est immobile.

Le procédé comporte une étape de détection d'une inhibition de la fonction marche/arrêt. Le procédé comprend également la détermination de la cause de l'inhibition.

Comme expliqué précédemment, sous certaines contraintes, le véhicule peut inhiber la fonction marche/arrêt parce que la mise en oeuvre de cette fonction pourrait détériorer certains éléments du véhicule.

C'est notamment le cas lorsque la présence du conducteur dans l'habitacle n'est pas confirmée. Par exemple, il est détecté que la ceinture de sécurité du conducteur n'est pas bouclée ou que la porte du conducteur est ouverte.

D'autres conditions de mise en oeuvre de l'inhibition ont été retenues comme l'état du système thermique de l'habitacle. Notamment, si le climatiseur peut être en convergence vers une température habitacle demandée par le client, il est avantageux d'inhiber la fonction marche/arrêt.

Une autre cause d'inhibition peut être la mise en oeuvre d'assistance. A titre d'illustration, il y aura inhibition lors de la mise en oeuvre de l'aide au stationnement ou de l'aide au démarrage en pente (en altitude, le besoin de freinage est plus important).

Certaines conditions de fonctionnement du système de freinage peuvent aussi entraîner une inhibition de la fonction marche/arrêt. A titre d'illustration, si le niveau de vide dans le système de freinage est inférieur à un seuil prédéterminé, il est préférable de laisser fonctionner le moteur thermique en toute circonstance de sorte que la pompe à vide du système de freinage n'arrête pas de fonctionner. De la sorte, un bon niveau de vide est garanti.

En l'absence de carburant dans le réservoir ou du moins en présence d'un niveau de carburant très faible, la fonction marche/arrêt sera également inhibée.

La fonction marche/arrêt peut aussi ne pas avoir été autorisée pour des raisons de protection des organes et/ou de pollution du groupe motopropulseur, ensemble qui comprend le moteur et la boîte de vitesse.

L'état du système d'alimentation et de gestion énergétique, et notamment le sous-ensemble électro-moteur (désigné sous l'acronyme SEEM), est aussi pris en compte. Sont en particulier considérés l'alternateur, le dispositif de maintien de tension contrôlée ou la batterie. L'arrêt automatique du moteur thermique est interdit si la charge de la batterie du véhicule est inférieure à un seuil prédéterminé.

Des considérations sur la redémarrabilité du moteur peuvent aussi être prises en compte. A titre d'exemple, si la vitesse atteinte après le désengagement du frein de stationnement électrique est insuffisante, la fonction marche/arrêt est inhibée.

L'état d'ouverture du capot du compartiment moteur peut aussi être pris en compte. Avec un capot ouvert, la fonction est inhibée.

Une cause d'inhibition de la fonction marche/arrêt ayant lieu dans des situations normales de fonctionnement du véhicule est liée à la boîte de vitesse. L'arrêt automatique du moteur ne se produit pas si le levier de boîte de vitesse est en position marche arrière.

Il est en outre possible qu'une situation de reconfiguration de la fonction marche/arrêt entraîne l'inhibition sans qu'il y ait défaillance du système.

Le procédé comporte enfin une étape de mémorisation de la cause. Le procédé permet ainsi de connaître la cause de l'inhibition de la fonction marche/arrêt. Cela facilite l'établissement d'un diagnostic concernant le fonctionnement des véhicules munis d'une fonction marche/arrêt en après-vente. Lorsque les inhibitions correspondent à des situations de fonctionnement normal du véhicule, il est en outre possible de préciser les conditions ayant entraîné le non-déclenchement de la fonction marche/arrêt. Cette présentation des causes à l'utilisateur lors de son passage au garage permet ainsi de lui expliquer de manière pédagogique comment fonctionne la fonction marche/arrêt de son véhicule. Autrement dit, un tel procédé permet d'assurer que le conducteur associe le non-arrêt automatique du moteur à une situation de fonctionnement normal alors que le conducteur s'attend à l'arrêt automatique du moteur thermique par la fonction marche/arrêt.

La mémorisation de la ou des causes peut être mise en oeuvre dans un calculateur. Un tel calculateur est généralement le contrôleur multifonctions moteurs (aussi désigné sous l'acronyme « CMM »).

Cette mémorisation peut être mise en oeuvre dans une matrice telle que représentée schématiquement sur la figure 1. La matrice de la figure 1 est une illustration structurelle de la mémoire du calculateur. Selon l'exemple de la figure 1, en abscisse, dix causes sont enregistrées en fonction d'une fenêtre kilométrique placée en ordonnée. Une fenêtre kilométrique est une distance en kilomètre qui est séparée en divisions ou incréments. Dans la figure 1, la fenêtre kilométrique comporte cinq divisions. Dix piles de cases sont mémorisées pour chacune des cinq divisions de la fenêtre kilométrique. Les nombres de dix causes et de cinq divisions sont données à titre d'exemple, étant entendu que d'autres nombres peuvent être envisagés.

A chacune des divisions de la fenêtre, la cause responsable de l'inhibition est enregistrée dans une des dix cases correspondantes. Pour faciliter le travail d'exploitation des données par le garagiste, les divisions peuvent être égales de manière à détecter plus facilement une anomalie, notamment la répétition anormale d'une cause dans une certaine division.

Le total des apparitions d'une cause donnée est obtenu pendant la durée de la fenêtre kilométrique. Par exemple, sur le schéma, la cause 1 est apparue 16 fois. Selon le cas particulier de la figure 1, le codage du calculateur est en hexadécimal. Ainsi, le chiffre 10 apparaît au-dessus de la cause 1 ce qui signifie 16 en décimal. De même la cause 3 apparaît 13 fois en hexadécimal, soit 19 fois en décimal. Dans l'exemple de la figure 1, certaines causes, comme les causes 4, 7 ou 9 n'interviennent jamais durant la fenêtre kilométrique alors que les causes 1, 2, 3 et 5 sont celles qui ont lieu le plus fréquemment.

Le calculateur assurant de nombreuses fonctions, il est généralement préférable de limiter la place mémoire consacrée à la mémorisation des causes d'inhibition de la fonction marche/arrêt. Ainsi, la fenêtre kilométrique sur laquelle les causes sont mémorisées peut être étroite tout en restant suffisamment large pour accumuler suffisamment de données. Il est ainsi souhaitable que la fenêtre kilométrique soit calibrable selon la capacité de mémorisation du calculateur. Un bon compromis est généralement obtenu pour une fenêtre kilométrique de 200 km.

Pour éviter d'accumuler trop de données dans la mémoire, il peut également être avantageux que le procédé comporte en outre une étape de détection permettant de déterminer l'entrée dans une phase dite de « STOP ». Ainsi, la détermination et la mémorisation de la cause n'ont lieu que dans les conditions dans lesquelles la fonction marche/arrêt est censée fonctionner. L'entrée en phase « STOP » correspond notamment au cas où le déclenchement de la fonction marche/arrêt est demandé par l'utilisateur. A titre d'illustration, un tel déclenchement est demandé par appui sur la pédale de frein. Il est également possible de détecter la position du bouton de contrôle manuel de l'inhibition de la fonction marche/arrêt. Lorsque la vitesse du véhicule est inférieure à un certain seuil, le véhicule entre également dans la phase « STOP ».

Selon une autre méthode pour éviter d'allouer trop d'espace dans la mémoire du calculateur pour la mise en oeuvre du procédé, celui-ci peut en outre comprendre une étape de remise à zéro des totaux des apparitions de cause à la fin de la fenêtre kilométrique. Cela permet de ne garder que les données les plus récentes qui sont a priori les plus pertinentes. L'utilisateur ira en effet consulter son garagiste dès qu'il croira être en présence un dysfonctionnement du système Start and Stop.

## Revendications

1. Un procédé de contrôle du fonctionnement d'un véhicule comprenant un moteur thermique et un calculateur ayant une capacité de mémoire, le véhicule étant muni d'une fonction marche/arrêt du moteur thermique, le procédé comporte les étapes de :
- détection d'une inhibition de la fonction marche/arrêt du moteur thermique;
- détermination de la cause de l'inhibition ;
- mémorisation de la cause.
**caractérisé en ce que** la mémorisation des causes a lieu pendant une fenêtre kilométrique calibrable en fonction de la capacité.

2. Le procédé selon la revendication 1, **caractérisé en ce que** le procédé comporte en outre une étape de détection de l'activation de la pédale de frein.

3. Le procédé selon la revendication 1 ou la revendication 2, **caractérisé en ce que** le procédé comporte en outre une étape de détection d'une vitesse du véhicule inférieure à un certain seuil.

4. Le procédé selon l'une des revendications 1 à 3, **caractérisé en ce que** la fenêtre kilométrique est de 200 km.

5. Le procédé selon l'une des revendications 1 à 4, **caractérisé en ce que** la fenêtre kilométrique est séparée en divisions égales.

6. Le procédé selon l'une des revendications 1 à 5, **caractérisé en ce que** les différentes causes enregistrées pendant la fenêtre kilométrique sont totalisées.

7. Le procédé selon l'une des revendications 1 à 6, **caractérisé en ce que** le procédé comprend en outre une étape de remise à zéro des totaux des apparitions de cause à la fin de la fenêtre kilométrique.

8. Le procédé selon l'une quelconque des revendications 1 à 7, **caractérisé en ce que** les causes sont l'une ou plusieurs des causes du groupe composé de :
- l'absence du conducteur dans l'habitacle,
- l'état du système thermique de l'habitacle,
- la mise en oeuvre de l'aide au stationnement,
- la mise en oeuvre de l'aide au démarrage en pente,
- le niveau de vide dans le système de freinage,
- le niveau de carburant dans lé réservoir,
- la protection des organes du groupe moto-propulseur,
- l'état du sous-ensemble électro-moteur,
- la redémarrabilité du moteur,
- l'état de la boîte de vitesse,
- l'état d'ouverture du capot moteur et
- une situation de reconfiguration de la fonction marche/arrêt.

9. Véhicule comprenant un moteur thermique et muni d'une fonction marche/arrêt du moteur thermique, **caractérisé en ce qu'**il comporte en outre un calculateur adapté à mettre en oeuvre le procédé selon l'une quelconque des revendications 1 à 8.

## Patentansprüche

1. Verfahren zur Funktionskontrolle eines Fahrzeugs, einen Verbrennungsmotor und einen Rechner umfassend, der eine Speicherkapazität aufweist, wobei das Fahrzeug mit einer Start/Stopp-Funktion des Verbrennungsmotors versehen ist, wobei das Verfahren die folgenden Schritte umfasst:
- Erkennen einer Unterdrückung der Start/Stopp-Funktion des Verbrennungsmotors;
- Bestimmen der Ursache für die Unterdrückung;
- Speichern der Ursache,
**dadurch gekennzeichnet, dass** die Speicherung der Ursachen während eines Kilometerfensters stattfindet, das in Abhängigkeit von der Kapazität kalibriert werden kann.

2. Verfahren nach Anspruch 1, **dadurch gekennzeichnet, dass** das Verfahren darüber hinaus einen Schritt zum Erkennen der Aktivierung des Bremspedals umfasst.

3. Verfahren nach Anspruch 1 oder Anspruch 2, **dadurch gekennzeichnet, dass** das Verfahren darüber hinaus einen Schritt zum Erkennen einer Geschwindigkeit des Fahrzeugs unter einem bestimmten Grenzwert umfasst.

4. Verfahren nach einem der Ansprüche 1 bis 3, **dadurch gekennzeichnet, dass** das Kilometerfenster 200 km beträgt.

5. Verfahren nach einem der Ansprüche 1 bis 4, **dadurch gekennzeichnet, dass** das Kilometerfenster in jeweils gleiche Teile unterteilt ist.

6. Verfahren nach einem der Ansprüche 1 bis 5, **dadurch gekennzeichnet, dass** die verschiedenen Ursachen, die während des Kilometerfensters gespeichert werden, zusammengezählt werden.

7. Verfahren nach einem der Ansprüche 1 bis 6, **dadurch gekennzeichnet, dass** das Verfahren darüber hinaus einen Schritt zum Nullsetzen der Gesamtwerte des Auftretens der Ursache am Ende des Kilometerfensters umfasst.

8. Verfahren nach einem der Ansprüche 1 bis 7, **dadurch gekennzeichnet, dass** die Ursachen eine oder mehrere der Ursachen aus der Gruppe sind, die sich wie folgt zusammensetzt:
- Abwesenheit des Lenkers im Fahrgastraum,
- Zustand der Wärmeanlage im Fahrgastraum,
- Anwenden der Einparkhilfe,
- Anwenden der Berganfahrhilfe,
- Vakuumniveau in der Bremsanlage,
- Treibstofffüllstand im Tank,
- Schutz der Organe der Antriebseinheit,
- Zustand der Elektromotor-Unterbaugruppe,
- Neustartbarkeit des Motors,
- Zustand des Getriebes,
- Öffnungszustand der Motorhaube,
- Situation einer Neukonfiguration der Start/Stopp-Funktion.

9. Fahrzeug, einen Verbrennungsmotor umfassend, und mit einer Start/Stopp-Funktion des Verbrennungsmotors versehen, **dadurch gekennzeichnet, dass** es darüber hinaus einen Rechner umfasst, der ausgeführt ist, um das Verfahren nach irgendeinem der Ansprüche 1 bis 8 auszuführen.

## Claims

1. A method for monitoring the operation of a vehicle including a heat engine and a computer having a memory capacity, the vehicle being provided with a function for starting/stopping the heat engine, the method comprises the steps of:
- detecting an inhibition of the function for starting/stopping the heat engine;
- determining the cause of the inhibition;
- storing the cause.
**characterised in that** the storing of the causes takes place during a kilometric window that can be calibrated according to the capacity.

2. The method according to claim 1, **characterised in that** the method further comprises a step of detecting the activation of the brake pedal.

3. The method according to claim 1 or claim 2, **characterised in that** the method further comprises a step of detecting a speed of the vehicle less than a certain threshold.

4. The method according to one of claims 1 to 3, **characterised in that** the kilometric window is 200 km.

5. The method according to one of claims 1 to 4, **characterised in that** the kilometric window is separated into equal divisions.

6. The method according to one of claims 1 to 5, **characterised in that** the various causes recorded during the kilometric window are totalled.

7. The method according to one of claims 1 to 6, **characterised in that** the method further comprises a step of resetting the totals of the appearances of cause at the end of the kilometric window.

8. The method according to any of claims 1 to 7, **characterised in that** the causes are one or several of the causes of the group comprised of:
- the absence of the driver in the passenger compartment,
- the state of the heating system in the passenger compartment,
- the implementation of the parking assistance,
- the implementation of the hill assistance,
- the vacuum level in the braking system,
- the level of fuel in the tank,
- the protection of the members of the powertrain,
- the state of the electric motor sub-assembly,
- the restartability of the engine,
- the state of the gearbox,
- the state of opening of the engine hood and
- a reconfiguration situation of the starting/stopping function.

9. Vehicle comprising a heat engine and provided with a function for starting/stopping the heat engine, **characterised in that** it further comprises a computer adapted to implement the method according to any of claims 1 to 8.
